# EUROPÄISCHE PATENTSCHRIFT

(11) **EP 2 122 986 B1**
(45) Veröffentlichungstag und Bekanntmachung des Hinweises auf die Patenterteilung: **29.12.2010**
(21) Anmeldenummer: 08717331.6
(22) Anmeldetag: 03.03.2008
(51) Int. Cl.: H04L 29/06

(54) **Verfahren und System zur Bereitstellung von Diensten für Endgeräte**
Method and system for the provision of services for terminal devices
Procédé et système de mise à disposition de services pour des terminaux

(30) Priorität: 16.03.2007 DE 102007012749
(43) Veröffentlichungstag der Anmeldung: 25.11.2009
(73) Patentinhaber: Siemens Aktiengesellschaft, 80333 München (DE)
(72) Erfinder: MOELLER, Wolf-Dietrich, 81739 München (DE); SHANMUGAM, Murugaraj, 53227 Bonn (DE); TSCHOFENIG, Hannes, Espoo (FI)
(86) Internationale Anmeldenummer: PCT/EP2008/052568
(87) Internationale Veröffentlichungsnummer: WO 2008/113674

(56) Entgegenhaltungen:
- US-A1- 2001 045 451
- US-A1- 2007 016 941

## Beschreibung

In herkömmlichen Netzwerken benötigen Nutzer als Identitätsnachweise sogenannte Credentials, beispielsweise Log-in-Namen oder Passwörter, um sich gegenüber einem Server zu authentifizieren und um auf dessen Dienste Zugriff zu haben. Ein Credential ist ein Nachweis, um eine Identitätsbehauptung des Benutzers zu bestätigen. Bei Credentials handelt es sich somit um Authentifizierungsmerkmale bzw. Berechtigungsnachweise. Bei herkömmlichen Netzwerken, wie beispielsweise dem Internet, besteht allerdings keine Transparenz bei einem Dienstezugriff. Ein Nutzer, der auf verschiedene Websites zugreifen möchte, die nicht zu der gleichen Webdomain gehören, muss sich für jede Website erneut authentisieren, selbst wenn ein Service Level Agreement SLA zwischen den verschiedenen Dienstleistungsanbietern besteht. Der Grund hierfür liegt darin, dass herkömmliche Browser nicht in der Lage sind, Nachweisinformationsdaten bzw. Credentials zu anderen Websites, die nicht zu der derzeitigen Websitedomain gehören, zu transportieren. Für den Nutzer ist es mühsam, jedesmal einen Identitätsnachweis, beispielsweise seinen Log-in-Namen oder sein Passwort einzugeben, wenn er die Domain wechselt.

Bei einem sogenannten Single Sign-on (SSO) bzw. einer Einmalanmeldung kann ein Nutzer nach einer einmaligen Authentifizierung auf alle Rechner und Dienste, für die er berechtigt ist, zugreifen, ohne sich jedesmal neu anmelden zu müssen.

Bei herkömmlichen Portalen wird beispielsweise die Identität eines angemeldeten Nutzers an die das Portal konstituierenden Seiten weitervererbt, ohne dass dies von dem Anwender bemerkt wird. Bei einem Single Sign-on identifiziert sich der Benutzer nur einmal unter Zuhilfenahme eines Authentifizierungsverfahrens, beispielsweise durch eine Passworteingabe. Anschließend übernimmt ein SSO-Mechanismus die Aufgabe, den Anwender zu authentifizieren. Bei Portalen kann sich der Nutzer einmalig bei dem Portal erstmals einloggen und wird dort authentifiziert oder grob autorisiert. Dazu erhält der Nutzer ein Merkmal, das ihn gegenüber den innerhalb des Portals integrierten Anwendungen eindeutig ausweist. Dieses Merkmal stellt einen Identitätsnachweis dar. Bei Portalen, die auf Webtechnologien basieren, geschieht dies beispielsweise in Form sogenannter Cookies. Bei einem Portal erhält der Nutzer auf diese Weise Zugang zu mehreren Webanwendungen, bei denen er sich nicht mehr separat einloggen muss.

Allerdings ist ein Single Sign-on trotz Cookies nicht möglich, wenn der Nutzer außerhalb der Webdomain navigiert bzw. surft.

US2007/016941 A1 offenbart ein Verfahren zum Bereitstellen von Diensten für Endgeräte, die jeweils ein Trusted Platform Module, TPM-Modul aufweisen, wobei das TPM-Modul eines Endgerätes eine Diensteanforderung mit einer ldentitätsbehauptung, die durch einen konfigurierbaren ldentitätsnachweis signiert wird, an einen Server zum Zugriff auf dessen Dienste sendet.

Es ist daher eine Aufgabe der vorliegenden Erfindung, ein Verfahren und ein System zum Bereitstellen von Diensten für Endgeräte bereitzustellen, bei dem ein Nutzer trotz nur einmaliger Anmeldung über verschiedene Domains hinweg navigieren kann.

Diese Aufgabe wird erfindungsgemäß durch ein Verfahren mit den im Patentanspruch 1 angegebenen Merkmalen gelöst.

Die Erfindung schafft ein Verfahren zum Bereitstellen von Diensten für Endgeräte, die jeweils ein TPM-Modul (Trusted Platform Module) aufweisen, wobei das TPM-Modul eines Endgerätes eine Diensteanforderung (Service Request) mit einer Identitätsbehauptung (ID-Assertion), die durch einen konfigurierbaren Identitätsnachweis (Credential) signiert wird, an einen Server zum Zugriff auf dessen Dienste sendet.

Bei einer Ausführungsform des erfindungsgemäßen Verfahrens validiert der Server nach Empfang der Diensteanforderung (Service Request) die Identitätsbehauptung (ID-Assertion) mit dem Identitätsnachweis (Credential) und verifiziert die Signatur.

Bei einer Ausführungsform des erfindungsgemäßen Verfahrens wird der Identitätsnachweis (Credential) durch einen Netzwerkbetreiber (Network Operator) in dem TPM-Modul des Endgerätes konfiguriert.

Der Netzwerkbetreiber konfiguriert in dem TPM-Modul des Endgerätes eine Zugriffskontrollliste ACL (Access Control List), die für verschiedene Dienste unterschiedlicher Server zugehörige Identitätsnachweise (Credentials) enthält.

Bei einer Ausführungsform des erfindungsgemäßen Verfahrens wird der Identitätsnachweis (Credential) durch ein Zertifikat des Netzwerkbetreibers gebildet.

Bei einer Ausführungsform des erfindungsgemäßen Verfahrens weist die Identitätsbehauptung (ID-Assertion) auf:
- Nutzer-Identitätsinformationsdaten,
- ein Zertifikat des Netzwerkbetreibers,
- einen Zeitstempel und
- dienstespezifische Zugriffsrestriktionen.

Bei einer Ausführungsform des erfindungsgemäßen Verfahrens sendet das Endgerät regelmäßig eine Dienstenutzbericht an einen Netzwerkbetreiber.

Bei einer Ausführungsform des erfindungsgemäßen Verfahrens werden die Identitätsnachweise (Credentials) nach einer vorgegebenen Zeitspanne (Life Time) ungültig.

Bei einer Ausführungsform des erfindungsgemäßen Verfahrens wird der Identitätsnachweis (Credential) durch einen SAML (Security Assertion Mark-up Language)-Identitätsnachweis gebildet.

Bei einer Ausführungsform des erfindungsgemäßen Verfahrens meldet sich das TPM-Modul einmalig bei dem jeweiligen Server an.

Die Erfindung schafft ferner ein Endgerät mit den im Patentanspruch 10 angegebenen Merkmalen.

Bei einer Ausführungsform des erfindungsgemäßen Endgerätes weist dieses zusätzlich ein SSO (Single Sign-On)-Modul auf.

Die Erfindung schafft ferner ein System mit den im Patentanspruch 12 angegebenen Merkmalen.

Im Weiteren werden bevorzugte Ausführungsformen des erfindungsgemäßen Verfahrens und des erfindungsgemäßen Systems zum Bereitstellen von Diensten für Endgeräte unter Bezugnahme auf die beigefügten Figuren zur Erläuterung erfindungswesentlicher Merkmale beschrieben.

Es zeigen:
- Figur 1:: ein Diagramm zur Darstellung einer möglichen Ausfüh- rungsform des erfindungsgemäßen Systems zum Bereit- stellen von Diensten für Endgeräte;
- Figur 2:: ein Diagramm zur Darstellung eines Dienstezugriffs bei einer möglichen Ausführungsform des erfindungs- gemäßen Systems zum Bereitstellen von Diensten für Endgeräte;
- Figur 3:: ein Diagramm zur Darstellung eines Dienstezugriffs bei einer möglichen Ausführungsform des erfindungs- gemäßen Systems zum Bereitstellen von Diensten für Endgeräte.

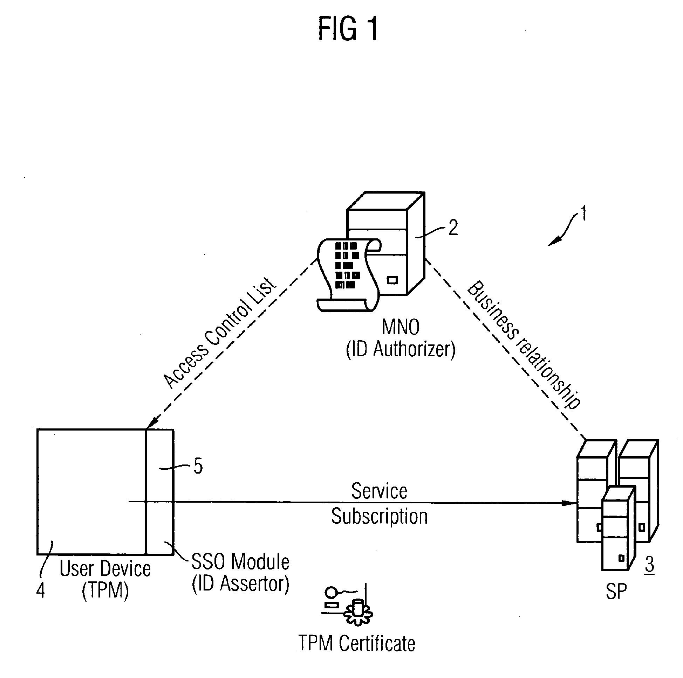

Wie man aus Figur 1 erkennen kann, weist das erfindungsgemäße System 1 zum Bereitstellen von Diensten für Endgeräte mindestens einen Netzwerkbetreiber 2 (Operator NO), beispielsweise einen mobilen Netzbetreiber (Mobile Network Operator MNO) auf, der Geschäftsbeziehungen bzw. ein Service Level Agreement SLA mit Dienstleistungsanbietern bzw. Service-Providern 3 hat. Darüber hinaus weist das System 1 eine Vielzahl von Endgeräten 4, insbesondere mobilen Endgeräten 4, auf. Die Endgeräte 4 weisen jeweils ein TPM-Modul 5 (Trusted Platform Module) auf. Bei dem TPM-Modul 5 handelt es sich beispielsweise um einen Chip, der in das mobile Endgerät 4 eingebaut ist. Das TPM-Modul 5 enthält eine eindeutige Kennung und dient zur eindeutigen Identifizierung des mobilen Endgerätes 4. Wie man aus Figur 1 erkennen kann, ist bei dem erfindungsgemäßen System 1 die Funktionalität des Identitätsanbieters bzw. Identity Providers IDP zwischen einem ID-Autorisierer, d. h. dem Netzwerkbetreiber 2, und einer Einheit zur Generierung einer Identitätstbehauptung (ID-Assertion) aufgeteilt, die beispielsweise durch ein Single Sign-On-Module (SSO) innerhalb des TPM-Moduls 5 des Endgeräts 4 gebildet wird.

Zu Beginn erfolgt eine Authentisierung des SSO-Moduls innerhalb des TPM-Moduls 5 durch den ID-Autorisierer bzw. den Netzwerkbetreiber 2, welcher anschließend in einer Konfigurationsphase einen Identitätsnachweis (Credential) generiert und über eine sichere Datenverbindung an das mobile Endgerät 4 überträgt. Der Identitätsnachweis wird beispielsweise durch ein Zertifikat (Delegation Certificate) gebildet und nach der Übertragung von dem Netzwerkbetreiber 2 zu dem TPM-Modul 5 dort gespeichert. Bei einer Ausführungsform verfällt das Zertifikat nach einer gewissen Zeitspanne bzw. Lebenszeit (Life Time). Der Netzwerkbetreiber 2 generiert eine Zugriffskontrollliste ACL (Access Control List) und überträgt diese zur Konfiguration des Endgerätes 4 an das jeweilige TPM-Modul 5. Die Zugriffskontrollliste ACL enthält für verschiedene Dienste unterschiedlicher Server 3 zugehörige Identitätsnachweise (Credentials). Die Zugriffskontrollliste ACL stellt eine Verknüpfung zwischen bestimmten Zugriffsrechten und einer Liste von Nutzern bzw. Endgeräten 4 her. Die übertragene Zugriffskontrollliste ACL ermöglicht dem Endgerät 4 den späteren Zugriff auf Dienstleistungen für den jeweiligen Server 3. Die Zugriffskontrollliste ACL gibt an, welcher Dienst bzw. Server welche Identität benötigt und welches Token bzw. welcher Identitätsnachweis unter welchen Umständen zu übertragen ist.

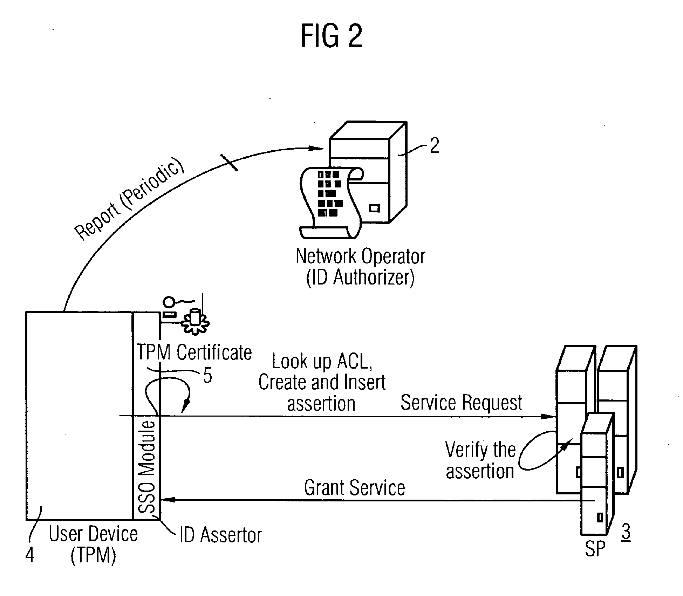

Figur 2 zeigt den Zugriff auf den Dienst eines Servers 3 eines Service-Providers durch ein Endgerät 4 mit konfigurierten TPM-Modulen 5. Wie man aus Figur 2 erkennen kann, wird für den Zugriff auf den Dienst des Servers 3 keine Onlineverbindung zwischen dem Endgerät 4 und der Autorisierungseinheit bzw. dem Netzwerkbetreiber 2 benötigt. Das Zertifikat des Netzwerkbetreibers 2 ist in dem Endgerät 4 installiert und die Zugriffskontrollliste ACL ist dort konfiguriert. Das TPM- Modul 5 weist eine Single Sign-On-Einheit (SSO) auf, die bei einer Anforderung eines gewünschten Dienstes die in dem TPM-Modul 5 enthaltenen Informationen aus der Zugriffskontrollliste ACL ausliest. Das TPM-Modul 5 fügt eine Identitätsbehauptung (ID-Assertion) in eine Diensteanforderung (Service Request) ein und signiert die Identitätsbehauptung durch einen aus der Zugriffskontrollliste ACL ausgelesenen Identitätsnachweis (Credential).

Bei einer möglichen Ausführungsform weist die Identitätsbehauptung (ID-Assertion) Nutzer-Identitätsinformationsdaten, ein Zertifikat des Netzwerkbetreibers 2, einen Zeitstempel und dienstespezifische Zugriffsrestriktionen auf. Die Identitätsbehauptung (ID-Assertion) wird beispielsweise durch eine SAML-Identitätsbehautung (Security Assertion Mark-up Language) gebildet. Bei der Security Mark-up Language (SAML) handelt es sich um eine XML-basierte Sprache zur Übermittlung von Identitätsinformationen. Der Server 3 des Service-Providers SP empfängt die Diensteanforderung (Service Request), welche die Identitätsbehauptung (ID-Assertion) enthält. Der Server 3 generiert zunächst den Identitätsnachweis, beispielsweise das Zertifikat, und verifiziert die digitale Signatur, um zu entscheiden, ob der Zugriff des mobilen Endgerätes 4 auf den Dienst erlaubt ist. Anschließend überträgt der Server 3 eine Nachricht, die dem mobilen Endgerät 4 mitteilt, ob der Zugriff auf den Dienst gestattet wird oder nicht.

Bei einer möglichen Ausführungsform überträgt das mobile Endgerät 4 in periodischen Zeitabständen einen Dienstenutzbericht bzw. einen Report zu dem Netzwerkbetreiber 2. Der Report enthält beispielsweise zusätzliche Informationen über die Anzahl der pro Tag bzw. pro Woche erzeugten Identitätsbehauptungen sowie Informationen von dem TPM-Modul 5 für den Identitätsanbieter bzw. Netzwerkbetreiber 2 zum Zwecke der statistischen Auswertung und zu Abrechnungszwecken. Das TPM-Modul 5 stellt sicher, dass diese Berichte bzw. Reports nicht manipulierbar sind.

Sobald der Nutzer bzw. das Endgerät 4 aus Sicht des Netzwerkbetreibers 2 keinen Zugriff mehr auf den Dienst haben soll, beispielsweise aufgrund einer Kreditüberschreitung oder aufgrund einer Diebstahlmeldung des mobilen Endgeräts 4 werden die entsprechenden Identitätsnachweise (Credentials) für den jeweiligen Dienst bzw. für alle Dienste zurückgenommen bzw. gesperrt. Bei einer möglichen Ausführungsform verfügt der Netzwerkbetreiber 2 über eine sogenannte Rücknahmeliste (Revocation List), in der zurückgenommenen Identitätsnachweise abgelegt sind. In einem interaktiven Vorgang werden die zurückzunehmenden Identitätsnachweise zur Sperrung der Identitätsnachweise innerhalb des TPM-Moduls 5 von dem Netzwerkbetreiber 2 an das mobile Endgerät 4 übertragen.

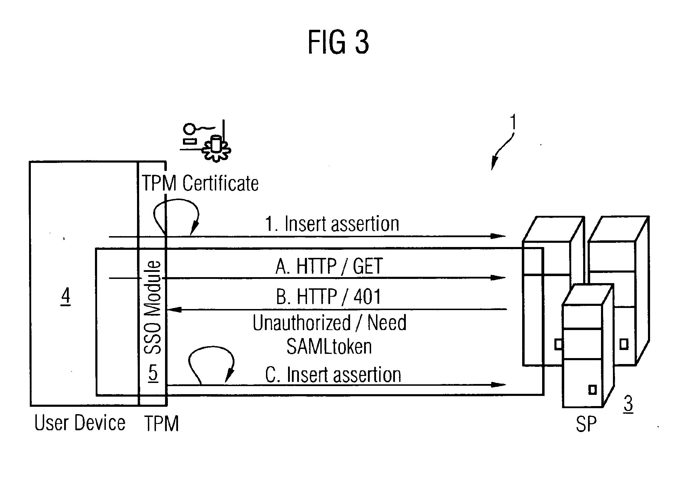

Figur 3 zeigt ein mögliches Szenario bei einem TPM-basierten Single Sign-On SSO in dem erfindungsgemäßen System 1. Bei der in Figur 3 dargestellten Ausführungsform werden HTTP/SIP-Datenübertragungsprotokolle mit Zugriff auf den Dienst bzw. Service des Servers 3 des Dienstleistungsanbieters bzw. des Service-Providers SP verwendet. In dem mobilen Endgerät 4 sind vorkonfigurierte Föderations-Informationsdaten abgelegt. Unter einer Föderation versteht man eine Organisation, bei der mehrere Teilnehmer, die über eine gewisse Eigenständigkeit verfügen, über Unternehmensgrenzen hinweg zusammengeschlossen werden. Dabei werden Identitätsdaten auf sichere Art über Sicherheitsdomains hinweg ausgetauscht. Wenn eine auf dem mobilen Endgerät 4 laufende Applikation bzw. laufendes Anwendungsprogramm eine Get/Post-Anforderung für einen Dienst des Servers 3 generiert, dann fügt das SSO-Modul innerhalb des TPM-Moduls 5 in transparenter Weise eine Identitätsbehauptung (ID-Assertion) unter Verwendung der durch den Netzwerkbetreiber 2 installierten Identitätsnachweise (Credentials) ein, sofern ein entsprechender Eintrag in der Zugriffskontrollliste ACL des SSO-Moduls vorliegt, welcher die Information über den Typ eines einzelnen Tokens oder sonstige Informationen über den Service bzw. den Dienst beinhaltet. Sofern kein Eintrag in der Zugriffskontrollliste ACL vorliegt, leitet das SSO-Modul innerhalb des TPM-Moduls 5 die Service-Anforderung bzw. den Request (HTTP/GET) an den Server 3 des Service-Providers SP weiter. Der Server 3 zeigt in einer weiteren Nachricht bzw. Message dem SSO-Modul innerhalb des TPM-Moduls 5 an, dass der Nutzer bzw. das Endgerät 4 noch nicht authentisiert ist und dass der Server 3 einen Identitätsnachweise, beispielsweise einen SAML-Token erwartet. Sobald das TPM-Modul 5 die Nachricht von dem Server 3 erhalten hat, generiert es eine Identitätsbehauptung (ID-Assertion) und sendet die mit einem Identitätsnachweis (Credential) signierte Identitätsbehauptung (ID-Assertion) zusammen mit dem Identitätsnachweis, beispielsweise dem Zertifikat, an den Server 3 des Service-Providers SP. Der Server 3 führt die Authentisierung anhand der Identitätsbehauptung (ID-Assertion) durch.

Ferner wird ein Eintrag in die Zugriffskontrollliste ACL durch den Netzwerkbetreiber 2 generiert und in dem SSO-Modul für zukünftige Dienstleistungsanforderungen (Service-Requests) abgelegt.

Sobald der Authentitätsautorisierer bzw. der Netzwerkbetreiber 2 das SSO-Modul innerhalb der TPM-Einheit authentisiert bzw. initialisiert, kann das TPM-Modul 5 als vertrauenswürdig angesehen werden und wird mit den notwendigen Identitätsnachweisen (Credentials) zur Signatur von Identitätsbehauptungen versehen.

Bei einer alternativen Ausführungsformen erfolgt die Authentisierung pro durchgeführter Sitzung (User Session). Dies kann einerseits auf Grundlage einer Authentifizierung gegenüber dem Netzwerkbetreiber 2 oder einer sonstigen Netzwerkeinheit erfolgen, wobei das Ergebnis in dem SSO-Modul des mobilen Endgerätes 4 abgespeichert wird, beispielsweise unter Verwendung von AKA zwischen einem xSIM und dem Netzwerkbetreiber. Alternativ kann basierend auf einigen der Identitätsnachweise (Credentials), beispielsweise auf Grundlage eines Nutzernamens oder Passwortes, die digital abgespeichert und lokal überprüfbar sind, die Authentisierung innerhalb des SSO-Moduls der TPM-Einheit erfolgen.

Bei einer möglichen Realisierung des erfindungsgemäßen Systems 1 konfiguriert der Identitätsautorisierer bzw. der Netzwerkbetreiber 2 in einer Konfigurationsphase eine Föderationslogik über eine Schnittstelle bzw. ein Interface derart, dass alle relevanten Informationen, wie beispielsweise Benutzeridentität, Serviceidentität und Art der Identitätsnachweise bzw. Credentials konfiguriert werden. Mithilfe der konfigurierten Informationen kann das SSO-Modul seine Aufgabe erfüllen, indem sie die Identitäten in der Diensteanforderung auf die Konfigurations-/Föderationsinformationen mappt. Falls kein derartiger Eintrag von Informationen in dem SSO-Modul vorliegt, fügt diese keine Identitätsbehauptung (ID-Assertion) bzw. kein Token in die Diensteanforderung (Service Request) ein, sondern leitet die entsprechende Diensteanforderung (Service Request) weiter. Dies kann beispielsweise dann der Fall sein, wenn der Nutzer über keinen Subskriptionseintrag in dem SSO-Modul verfügt, aber dennoch SSO einsetzen möchte. In diesem Fall gibt der Server eine 401/302-Reply-Message für die ankommende Diensteanforderung mit der von ihm erwarteten Token-Information ab. Das TPM-Modul 5 speichert die Antwort des Servers 3 ab und bearbeitet diese. Anschließend fügt das TPM-Modul 5 das notwendige Token ein und sendet erneut eine Diensteanforderung für den entsprechenden Dienst. Darüber hinaus veranlasst das TPM-Modul 5 einen entsprechenden Eintrag in dem SSO-Modul, welcher den Dienst, den Token-Typ usw. für spätere Diensteanforderungen angibt.

Bei einer Ausführungsform wird das SSO-Modul in der Konfigurationsphase derart konfiguriert, dass es über eine Liste der Föderationslogik verfügt und die notwendige Föderationsinformationen dem jeweiligen Nutzer zur Verfügung stellt. Hierfür erfasst das TPM-/SSO-Modul die laufenden eingeloggten Nutzerprozesse und deren jeweilige Diensteanforderungen. Falls ein Nutzer den Netzwerkbetreiber 2 wechselt oder falls der Netzwerkbetreiber bzw. der Identitätsautorisierer eine unzulässige Aktivität seitens des Nutzers feststellt, können die bestehenden Föderationsinformationen zurückgenommen werden. Diese Rücknahme bzw. Sperrung kann zentral ohne Mitwirkung des jeweiligen TPM-Moduls 5 erfolgen. Falls der Nutzer verschiedene Accounts bei dem Netzwerkbetreiber 2 hat, wird die Föderationslogik durch den aktuell eingeloggten Account bei dem Netzwerkbetreiber 2 begleitet. Die Föderationslogik wird von dem mobilen Endgerät 4 verwaltet. Autorisierte Applikationen haben Zugriff auf die Föderationsinformationen. Jeder Netzwerkbetreiber 2 hat Zugriff auf die Konfigurationsinformationen des Endgerätes 4, um die Föderationslogik während einer Subskriptionsphase bei einem neuen Service-Provider SP zu bootstrappen. Die TPM-/SSO-Applikation hat ebenfalls Zugriff auf die Föderationslogik, um die Identitätsnachweise bzw. Credentials zu generieren.

Das erfindungsgemäße System 1 hat als Vorteil, dass die Übertragung der Identitätsbehauptungen (ID-Assertion) in verteilter Weise erfolgt. Dies geschieht, indem die Autorisierung eines Nutzers von einem zentralen Identitätsanbieter bzw. Identity Provider IDP auf die Endgeräte 4 delegiert bzw. an diese abgegeben wird. Aufgrund dieses geteilten Ansatzes kann der Netzwerkbetreiber 2 bzw. der Identitätsanbieter Resourcen in einem erheblichen Umfang einsparen. Auf diese Weise sinken die Betriebskosten eines Netzwerkbetreibers beträchtlich.

Ein weiterer Vorteil des erfindungsgemäßen Systems 1 besteht darin, dass das mobile Endgerät 4 für einen Zugriff auf Dienste des Dienstleistungsanbieters bzw. Service Providers SP keine Onlineverbindung mit dem Netzwerkbetreiber 2 benötigt.

## Patentansprüche

1. Verfahren zum Bereitstellen von Diensten für Endgeräte (4), die jeweils ein Trusted Platform Module, TPM-Modul (5) aufweisen, wobei:
- das TPM-Modul (5) des Endgerätes (4) eine Diensteanforderung mit einer Identitätsbehauptung die durch einen konfigurierbaren Identitätsnachweis signiert wird, an einen Server (3) zum Zugriff auf dessen Dienste sendet,
**dadurch gekennzeichnet, dass**
- ein Netzwerkbetreiber (2) in einem TPM-Modul (5) des Endgerätes (4) eine Zugriffskontrollliste ACL konfiguriert, die für verschiedene Dienste unterschiedlicher Server (3) zugehörige Identitätsnachweise enthält;
- das Senden erfolgt, wenn der konfigurierbare Identitätsnachweis als Eintrag in der Zugriffskontrollliste ACL vorliegt.

2. Verfahren nach Anspruch 1,
wobei der Server (3) nach Empfang der Diensteanforderung mit der Identitätsbehauptung den Identitätsnachweis validiert und die Signatur verifiziert.

3. Verfahren nach Anspruch 1,
wobei der Identitätsnachweis durch einen Netzwerkbetreiber (2) in dem TPM-Modul (5) des Endgerätes (4) konfiguriert wird.

4. Verfahren nach Anspruch 1,
wobei der Identitätsnachweis durch ein Zertifikat des Netzwerkbetreibers (2) gebildet wird.

5. Verfahren nach Anspruch 1,
wobei die Identitätsbehauptung aufweist:
- Nutzer-Identitätsinformationsdaten,
- ein Zertifikat des Netzwerkbetreibers,
- einen Zeitstempel und
- dienstespezifische Zugriffsrestriktionen.

6. Verfahren nach Anspruch 1,
wobei das Endgerät (4) regelmäßig einen Dienstenutzbericht an einen Netzwerkbetreiber (2) sendet.

7. Verfahren nach Anspruch 1,
wobei der Identitätsnachweis nach einer vorgegebenen Zeitspanne ungültig wird.

8. Verfahren nach Anspruch 1,
wobei die Identitätsbehauptung durch einen SAML Security Assertion Mark-up Language - Identitätsbehauptung gebildet wird.

9. Verfahren nach Anspruch 1,
wobei sich das TPM-Modul (5) einmalig bei dem jeweiligen Server (3) anmeldet.

10. Endgerät (4) mit Trusted Platform Module, TPM-Modul (5),
welches eine Diensteanforderung mit einer Identitätsbehauptung die durch einen konfigurierbaren Identitätsnachweis signiert ist, an einen Server (3) zum Zugriff auf dessen Dienste sendet, **dadurch gekennzeichnet, dass**
das Senden erfolgt, wenn der konfigurierbare Identitätsnachweis als Eintrag in einer Zugriffskontrollliste ACL vorliegt, wobei die Zugriffskontrollliste ACL für verschiedene Dienste unterschiedlicher Server (3) zugehörige Identitätsnachweise
enthält und durch einen Netzwerkbetreiber (2) in dem TPM-Modul (5) des Endgerätes (4) konfiguriert ist.

11. Endgerät nach Anspruch 10,
wobei das Endgerät (4) ein SSO Single Sign-On-Modul aufweist.

12. System (1) zum Bereitstellen von Diensten für Endgeräte (4), die jeweils ein Trusted Platform Module, TPM-Modul (5) aufweisen,
wobei die Endgeräte (4) Diensteanforderungen mit Identitätsbehauptungen die durch einen konfigurierbaren Identitätsnachweis signiert sind, an einen Server (3) zum Zugriff auf einen Dienst senden,
**dadurch gekennzeichnet, dass**
ein Netzwerkbetreiber (2) die Identitätsnachweise in den TPM-Modulen (5) der Endgeräte Konfiguriert, und
das Senden erfolgt, wenn der konfigurierbare Identitätsnachweis als Eintrag in einer Zugriffskontrollliste ACL vorliegt, wobei die Zugriffskontrollliste ACL für verschiedene Dienste unterschiedlicher Server (3) zugehörige Identitätsnachweise enthält und durch einen Netzwerkbetreiber (2) in dem jeweiligen TPM-Modul (5) des jeweiligen Endgerätes (4) konfiguriert ist.

## Claims

1. Method for the provision of services for terminal devices (4), which each have a Trusted Platform Module (TPM), (5), with:
- the TPM module (5) of the terminal device (4) sending a service request with an ID assertion, which is signed by a configurable credential, to a server (3) for access to the services thereof,
**characterised in that**
- a network operator (2) in a TPM module (5) of the terminal device (4) configures an access control list (ACL) which contains credentials associated with different servers (3) for different services;
- the sending takes place if the configurable credential exists as an entry in the access control list (ACL).

2. Method according to claim 1,
with the server (3) validating the credential and verifying the signature on receipt of the service request with the ID assertion.

3. Method according to claim 1,
with the credential being configured by a network operator (2) in the TPM module (5) of the terminal device (4).

4. Method according to claim 1,
with the credential being formed by a certificate of the network operator (2).

5. Method according to claim 1,
with the ID assertion having:
- user identity information data,
- a certificate of the network operator,
- a time stamp and,
- service-specific access restrictions.

6. Method according to claim 1,
with the terminal device (4) regularly sending a useful service usage report to a network operator (2).

7. Method according to claim 1,
with the credential being invalid after a predetermined lifetime.

8. Method according to claim 1,
with the ID assertion being formed by a security assertion mark-up language (SAML) ID assertion.

9. Method according to claim 1,
with the TPM module (5) initially registering with the respective server (3).

10. Terminal device (4) with Trusted Platform Module (TPM) (5),
which sends a service request with an ID assertion, which is signed by a configurable credential, to a server (3) for access to the services thereof,
**characterised in that**
the sending takes place if the configurable credential exists as an entry in an access control list (ACL), with the access control list (ACL) containing credentials associated with different servers (3) for different services and being configured by a network operator (2) in the TPM module (5) of the terminal device (4).

11. Terminal device according to claim 10,
with the terminal device (4) having a single sign-on (SSO) module.

12. System (1) for the provision of services for terminal devices (4), which each have a Trusted Platform Module (TPM) (5),
with the terminal devices (4) sending service requests with ID assertions, which are signed by a configurable credential, to a server (3) for access to the services thereof, **characterised in that**
a network operator (2) configures the credentials in the TPM module (5) of the terminal devices, and
the sending takes place if the configurable credential exists as an entry in the access control list (ACL), with the access control list (ACL) containing credentials associated with different servers (3) for different services and being configured by a network operator (2) in the respective TPM module (5) of the respective terminal device (4).

## Revendications

1. Procédé de mise à disposition de services pour des terminaux (4) qui comportent respectivement un module TPM Trusted Platform Module (5),
- le module TPM (5) du terminal (4) envoyant à un serveur (3), pour accéder aux services de celui-ci, une demande de service avec une assertion d'identité qui est signée par un justificatif d'identité configurable,
**caractérisé en ce que**
- un exploitant de réseau (2) configure, dans un module TPM (5) du terminal (4), une liste de contrôle d'accès ACL qui contient, pour différents services de différents serveurs (3), des justificatifs d'identité associés ;
- l'émission a lieu lorsque la preuve d'identité configurable est présente en tant qu'entrée dans la liste de contrôle d'accès ACL.

2. Procédé selon la revendication 1, le serveur (3) validant le justificatif d'identité après la réception de la demande de service avec l'assertion d'identité et vérifiant la signature.

3. Procédé selon la revendication 1, le justificatif d'identité étant configuré par un exploitant de réseau (2) dans le module TPM (5) du terminal (4).

4. Procédé selon la revendication 1, le justificatif d'identité étant constitué par un certificat de l'exploitant de réseau (2).

5. Procédé selon la revendication 1, l'assertion d'identité comportant
- des données d'information sur l'identité de l'usager,
- un certificat de l'exploitant de réseau,
- une estampille et
- des restrictions d'accès spécifiques au service.

6. Procédé selon la revendication 1, le terminal (4) envoyant régulièrement un rapport d'utilisation des services à un exploitant de réseau (2).

7. Procédé selon la revendication 1, le justificatif d'identité perdant sa validité au bout d'un laps de temps prédéterminé.

8. Procédé selon la revendication 1, l'assertion d'identité étant constituée par une assertion d'identité Security Assertion Mark-up Language SAML.

9. Procédé selon la revendication 1, le module TPM (5) faisant une demande d'accès unique au serveur respectif (3).

10. Terminal (4) avec un module TPM Trusted Platform Module (5), lequel envoie à un serveur (3), pour accéder aux services de celui-ci, une demande de service avec une assertion d'identité qui est signée par un justificatif d'identité configurable, **caractérisé en ce que** l'émission a lieu lorsque le justificatif d'identité configurable est présent en tant qu'entrée dans une liste de contrôle d'accès ACL, la liste de contrôle d'accès ACL contenant, pour différents services de différents serveurs (3), des justificatifs d'identité associés et étant configurée par un exploitant de réseau (2) dans le module TPM (5) du terminal (4).

11. Terminal selon la revendication 10, le terminal (4) comportant un module Single Sign-On SSO.

12. Système (1) de mise à disposition de services pour des terminaux (4) qui comportent respectivement un module TPM Trusted Platform Module (5),
- les terminaux (4) envoyant à un serveur (3), pour accéder à un service, des demandes de service avec des assertions d'identité qui sont signées par un justificatif d'identité configurable,
**caractérisé en ce que**
- un exploitant de réseau (2) configure les justificatifs d'identité dans les modules TPM (5) des terminaux et
- l'émission a lieu lorsque la preuve d'identité configurable est présente en tant qu'entrée dans une liste de contrôle d'accès ACL, la liste de contrôle d'accès ACL contenant, pour différents services de différents serveurs (3), des justificatifs d'identité associés et étant configurée par un exploitant de réseau (2) dans le module TPM respectif (5) du terminal respectif (4).
